**Europäisches Patentamt**

**European Patent Office**

**Office européen des brevets**

(19)

(11) Numéro de publication: **0 058 601**
**B1**

(12) ## FASCICULE DE BREVET EUROPEEN

(45) Date de publication du fascicule du brevet:
03.07.85

(51) Int. Cl.⁴: **G 21 C 13/00**

(21) Numéro de dépôt: **82400220.8**

(22) Date de dépôt: **08.02.82**

(54) Structure de bâtiment réacteur comportant une toiture de bâtiment couronne encastrée dans la jupe cylindrique de l'enceinte de confinement.

(30) Priorité: **10.02.81 FR 8102580**

(43) Date de publication de la demande:
**25.08.82 Bulletin 82/34**

(45) Mention de la délivrance du brevet:
**03.07.85 Bulletin 85/27**

(84) Etats contractants désignés:
**BE CH DE FR GB IT LI**

(56) Documents cités:
**CH - A - 544 382**
**DE - A - 2 020 046**
**DE - B - 2 315 318**
**FR - A - 1 501 264**
**FR - A - 2 226 729**
**NL - A - 7 001 542**

**NUCLEAR ENGINEERING INTERNATIONAL décembre 1970 I. HAGA "Oskarshamn reactors I and II Salient Features", pages 989-992**

(73) Titulaire: **FRAMATOME ET CIE., Tour Fiat 1, Place de la Coupole, F-92400 Courbevoie (FR)**

(72) Inventeur: **Hista, Jean Claude, 17, Avenue de la Maye, F-78000 Versailles (FR)**

(74) Mandataire: **Mongrédien, André et al, c/o BREVATOME 25, rue de Ponthieu, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'invention a pour objet une structure de bâtiment réacteur comportant une toiture de bâtiment couronne encastrée dans la jupe cylindrique de l'enceinte de confinement.

D'une manière générale, le bâtiment dans lequel est installé un réacteur nucléaire est constitué par une enceinte de confinement à l'intérieur de laquelle sont disposées des structures internes qui supportent les composants du circuit primaire. Généralement, un bâtiment couronne qui contient la plupart des systèmes auxiliaires et de sécurité entoure l'enceinte de confinement. L'enceinte de confinement et le bâtiment couronne s'élèvent de préférence sur un radier général commun, ce qui permet de s'affranchir des tassements différentiels qui résulteraient de fondations sur des radiers indépendants.

Une structure de ce type est décrite dans le brevet français FRA 2 226 729, déposé le 18 avril 1974, pour «Centrale nucléaire à enveloppe de sécurité entourée d'un bâtiment de béton» au nom de la Société SIEMENS AKTIENGESELLSCHAFT. Ce brevet décrit une structure de bâtiment de réacteur nucléaire dotée d'une enveloppe de sécurité et d'un bâtiment de béton entourant cette dernière et formant avec elle un espace annulaire qui renferme des installations annexes, notamment des dispositifs de refroidissement d'urgence. Le bâtiment de béton et l'enveloppe de sécurité en béton ont une fondation commune également en béton. Le bâtiment de béton est en appui sur le cylindre de béton et présente un toit plat dans la zone d'appui.

L'invention a pour objet une structure de bâtiment pour réacteur nucléaire qui permet d'améliorer encore la protection en cas de séisme et contre des missiles extérieurs particulièrement dimensionnants.

Plus précisément, la structure de bâtiment pour réacteur nucléaire constituée par une enceinte de confinement se composant d'une jupe cylindrique fermée à sa partie supérieure par un dôme, par un bâtiment couronne entourant l'enceinte de confinement, ce bâtiment couronne se composant d'une jupe cylindrique et d'une toiture raccordée à la jupe cylindrique de l'enceinte de confinement, l'enceinte de confinement et le bâtiment couronne s'élevant sur un radier général commun, et par des structures internes positionnées à l'intérieur de l'enceinte de confinement, les structures internes étant désolidarisées de l'enceinte de confinement se caractérise en ce que la toiture du bâtiment couronne est de forme tronconique ou torique et est encastrée dans la jupe cylindrique de l'enceinte de confinement à la hauteur des supports du pont de manutention du bâtiment réacteur, le radier général se composant d'une partie alvéolée de grande inertie située sous le bâtiment couronne et d'une partie pleine, surbaissée par rapport à la partie alvéolée et située sous l'enceinte de confinement, les structures internes du bâtiment couronne étant en appui sur la partie alvéolée de grande inertie du radier général et désolidarisées de la jupe externe, de la jupe cylindrique de l'enceinte de confinement, et de la toiture du bâtiment couronne.

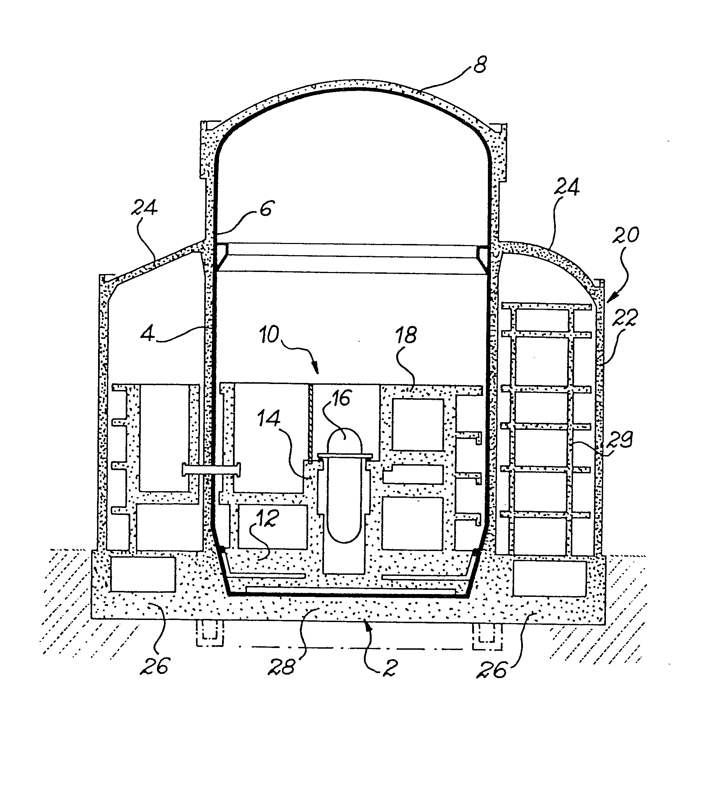

D'autres caractéristiques et avantages de l'invention apparaîtront encore à la lecture de la description qui suit d'un exemple de réalisation de l'invention, faite à titre indicatif et nullement limitatif, en référance à la figure jointe, qui représente une vue en coupe d'une structure de bâtiment réacteur.

Cette structure de bâtiment réacteur se compose d'un radier général 2 sur lequel s'élève une enceinte de confinement. L'enceinte de confinement 4 se compose d'une jupe cylindrique 6 fermée à sa partie supérieure par un dôme 8. L'enceinte de confinement a pour but d'éviter toute fuite de substance radioactive en cas d'accident, et de résister aux effets de pression et de température résultant d'une rupture éventuelle des circuits primaire ou secondaire.

A l'intérieur de l'enceinte de confinement sont disposées les structures internes 10. Ces structures internes comprennent essentiellement un radier 12 dit «radier des structures internes», un puits de cuve 14 entourant et supportant la cuve 16 du réacteur et des casemates 18 situées autour du puits de cuve.

Autour de l'enceinte de confinement 4 s'élève le bâtiment couronne 20 ceinturant l'enceinte de confinement 4. Ce bâtiment couronne se compose d'une jupe cylindrique 22 s'élevant sur le radier général 2 et d'une toiture 24 raccordée à la jupe 6 de l'enceinte de confinement. A l'intérieur du bâtiment couronne sont installés des auxiliaires liés à la sauvegarde du réacteur ou présentant un risque radiologique important.

L'enceinte de confinement 4, le bâtiment couronne 20 et les structures internes 10 sont fondés sur un radier commun, le radier général 2, ce qui permet de s'affranchir des tassements différentiels qui pourraient se produire s'ils étaient fondés sur des radiers indépendants.

Cette structure permet d'assurer une protection contre les missiles extérieurs du bâtiment réacteur et des auxiliaires liés à la sauvegarde du réacteur ou présentant un risque radiologique important: le missile pris en compte pouvant aller jusqu'à un avion militaire produisant lors d'un choc une charge statique équivalente de 11 000 tonnes répartie sur 7 m².

Conformément à l'invention, la toiture 24 du bâtiment couronne est encastrée dans la jupe cylindrique 6 de l'enceinte de confinement. L'encastrement de la toiture du bâtiment couronne sur l'enceinte de confinement est réalisé au moyen d'armatures passives méridiennes ancrées de part et d'autre de la section d'encastrement.

La solidarisation du bâtiment couronne et de l'enceinte de confinement présente les avantages suivants:

1. En cas de chute d'un missile extérieur, elle améliore la tenue de la toiture 24 du bâtiment couronne.

2. La masse intéressée étant plus importante, les déplacements relatifs de l'ensemble formé par l'enceinte de confinement et le bâtiment couronne par rapport aux structures internes sont plus faibles.

3. Le mode de vibration de l'ensemble formé par l'enceinte de confinement et le bâtiment couronne étant de fréquence plus élevée que ceux de chaque structure prise isolément, le niveau de réponse de la structure aux séismes s'en trouve réduit.

4. Enfin, elle évite le développement de modes de vibrations complexes dans le radier.

5. Pour des raisons de ventilation et de risque de contamination de certains locaux situés au dernier niveau du bâtiment couronne, une structure de bâtiment dans laquelle l'enceinte de confinement et le bâtiment couronne sont désolidarisés, nécessite la réalisation d'un joint étanche à l'air à la jonction de la toiture du bâtiment couronne avec la jupe de l'enceinte de confinement, cette sujetion n'existe pas dans le cas de l'encastrement.

Le niveau de solidarisation coïncide avec les consoles supports du pont de manutention du bâtiment réacteur.

La toiture 24 du bâtiment couronne 20 est de forme tronconique, ou de forme torique, comme représenté sur la figure. Elle peut être à simple ou double courbure.

Les structures internes 29 du bâtiment couronne sont désolidarisées de la jupe de l'enceinte de confinement et de l'enveloppe du bâtiment couronne. Ceci permet, en cas d'impact d'un missile, de bénéficier intégralement de l'effet de coque produit par la forme de l'enveloppe, de ne pas transmettre des efforts importants aux structures internes 29, et de ne pas les ébranler directement. Enfin, cette désolidarisation permet le libre développement des variations dimensionnelles de l'enveloppe par rapport aux structures internes 29 sous l'action du retrait et de la température.

Le radier général 2 est constitué de deux parties de conceptions différentes. Sous le bâtiment couronne 20 est prévue une partie de radier alvéolée de grande inertie 26, les alvéoles étant utilisées pour l'installation de certains équipements liés à la sauvegarde. Sous l'enceinte de confinement 4 est prévue une partie de radier pleine 28 surbaissée par rapport à la partie alvéolée. Le surbaissement de la partie 26 du radier, par rapport à la partie pleine 28, permet d'abaisser le niveau de l'ensemble des structures internes 10 et du bâtiment couronne 20, ainsi que des composants qu'elles supportent. Il en résulte une réduction de la hauteur du bâtiment couronne. En abaissant le niveau du centre de gravité des masses du bâtiment couronne, on réduit les sollicitations dans ce bâtiment en cas de secousses sismiques.

Du fait de sa grande raideur, le radier alvéolé se déforme peu, ce qui permet d'assurer la stabilité mécanique de l'encastrement de la couverture du bâtiment couronne dans la jupe de l'enceinte de confinement.

En effet, la déformée verticale différentielle entre le point du radier au niveau de la jupe de l'enceinte de confinement et le point du radier au niveau de l'enveloppe du bâtiment couronne est faible.

En conséquence les appuis de la toiture du bâtiment couronne constitués par l'enceinte de confinement et la jupe de l'enveloppe du bâtiment couronne ont une dénivellation différentielle suffisamment faible pour ne pas engendrer des sollicitations significatives au niveau de l'encastrement de la toiture du bâtiment couronne sur l'enceinte de confinement.

En cas d'accident de référence, produisant une surpression dans l'enceinte de confinement, celle-ci se trouve frettée par la toiture du bâtiment couronne qui supporte alors des contraintes de traction circonférentielle dont la valeur décroît à partir de l'encastrement.

Dans le cas des missiles particulièrement dimensionnants, tels que, par exemple un avion militaire, l'encastrement de la toiture du bâtiment couronne sur la jupe de l'enceinte de confinement permet d'alléger très sensiblement la structure de l'enveloppe du bâtiment couronne.

Il existe deux modes de réalisation de la structure de bâtiment réacteur de l'invention.

Selon un premier mode de réalisation, l'enceinte de confinement et le bâtiment couronne sont réalisés en béton armé.

Selon un second mode de réalisation, l'enceinte de confinement est réalisée en béton précontraint dans les directions horizontale et verticale, le bâtiment couronne étant réalisé en béton armé.

Par rapport à une enceinte de confinement en béton précontraint, le mode de réalisation de la structure en béton armé permet la suppression des nervures de précontrainte gênantes pour l'installation dans le bâtiment couronne.

Pour la partie de l'enceinte de confinement située au-dessus du bâtiment couronne et qui doit être capable de résister à l'impact du missile, les armatures passives sont dimensionnées pour le plus contraignant des cas de charge: l'accident de référence ou le missile. Par contre, pour une enceinte de confinement en béton précontraint se cumulent deux types d'armatures:

— les armatures de précontrainte pour l'accident de référence,

– les armatures passives pour le missile.

Pour ce premier mode de réalisation il n'est pas nécessaire de prévoir une toiture provisoire pour le bâtiment couronne.

Lors du bétonnage de la jupe de l'enceinte de confinement, des armatures en attente sont prévues au droit de la troiture du bâtiment couronne; ces attentes peuvent se présenter soit sous la forme d'armatures traditionelles soit sous la forme de manchons CALDWELL.

Dans le cas du second mode de réalisation, la précontrainte de l'enceinte de confinement est faite avant la réalisation de l'encastrement de telle sorte que seules les déformations différées de précontrainte (fluage) agissent sur la structure complète. Les contraintes apportées par le retrait différentiel de l'enveloppe du bâtiment couronne par rapport à l'enceinte de confinement et par le fluage sous précontrainte de l'enceinte de confinement sont de signe contraire et se neutralisent donc partiellement.

Pour la réalisation de ce second mode, compte tenu des astreintes de la construction, la mise hors d'eau du bâtiment couronne doit être assurée avant l'achèvement de la précontrainte de l'enceinte de confinement. En conséquence, une toiture provisoire étanche partielle ou totale doit être prévue; cette toiture sert de coffrage pour la toiture définitive qui peut alors être bétonnée, après achèvement de la précontrainte de l'enceinte de confinement.

Deux possibilités sont offertes:
– soit cette toiture provisoire est intégrée 5 à la toiture définitive;
– soit elle est démontée après bétonnage de la toiture définitive.

**Revendications**

1. Structure de bâtiment pour réacteur nucléaire constituée par une enceinte de confinement (4) se composant d'une jupe cylindrique (6) fermée à sa partie supérieure par un dôme (8), par un bâtiment couronne (20) entourant l'enceinte de confinement (4), ce bâtiment couronne (20) se composant d'une jupe cylindrique (22) et d'une toiture (24) raccordée à la jupe cylindrique (6) de l'enceinte de confinement, l'enceinte de confinement (4) et le bâtiment couronne (20) s'élevant sur un radier général commun (2), et par des structures internes (10) positionnées à l'intérieur de l'enceinte de confinement (4), les structures internes (10) étant désolidarisées de l'enceinte de confinement, caractérisée en ce que la toiture (24) du bâtiment couronne est de forme tronconique ou torique et est encastrée dans la jupe cylindrique (6) de l'enceinte de confinement (4) à la hauteur des supports du pont de manutention du bâtiment réacteur, le radier général se composant d'une partie alvéolée (26) de grande inertie située sous le bâtiment couronne (20) et d'une partie pleine (28), surbaissée par rapport à la partie alvéolée (26) et située sous l'enceinte de confinement (4), les structures internes (29) du bâtiment couronne étant en appui sur la partie alvéolée de grande inertie (26) du radier général et désolidarisées de la jupe externe (22), de la jupe cylindrique (6) de l'enceinte de confinement, et de la toiture (24) du bâtiment couronne.

2. Structure de bâtiment réacteur selon la revendication 1, caractérisée en ce que l'enceinte de confinement (4) et le bâtiment couronne (20) sont en béton armé.

3. Structure de bâtiment réacteur selon la revendication 1, caractérisée en ce que l'enceinte de confinement (4) est précontrainte dans les directions horizontales et verticales, et en ce que l'enveloppe du bâtiment couronne (20) est en béton armé.

**Patentansprüche**

1. Reaktorbau, bestehend aus einer Sicherheitshülle (4), die sich aus einem in seinem oberen Abschnitt von einer Haube (8) verschlossenen Zylindermantel (6) zusammensetzt, aus einem Ringbau (20), der die Sicherheitshülle (4) umgibt und aus einem Zylindermantel (22) sowie einem sich an den Zylindermantel (6) der Sicherheitshülle (4) anschliessenden Dach (24) besteht, wobei sich die Sicherheitshülle (4) und der Ringbau (20) auf einem gemeinsamen Fundament erstrecken, und aus im Inneren der Sicherheitshülle (4) befindlichen Innengefügen (10), die von der Sicherheitshülle getrennt sind, dadurch gekennzeichnet, dass das Dach (24) des Ringbaus kegelstumpfförmige oder torische Form hat und in den Zylindermandel (6) der Sicherheitshülle (4) auf der Höhe der Lager der Förderbrücke des Reaktorbaus eingelassen ist, dass sich das Fundament zusammensetzt aus einem zellenförmigen Teil (26) hoher Dimensionsstabilität unterhalb des Ringbaus (20) und aus einem flachen Teil (28), der in Bezug auf den zellenförmigen Teil (26) flach gebaut ist und sich unterhalb der Sicherheitshülle (4) befindet, und dass sich die Innengefüge (29) des Ringbaus auf dem zellenförmigen Teil grosser Dimensionsstabilität (26) des Fundaments abstützen und von dem äusseren Mantel (22), dem Zylindermantel (6) der Sicherheitshülle und dem Dach (24) des Ringbaus getrennt sind.

2. Reaktorbau nach Anspruch 1, dadurch gekennzeichnet, dass die Sicherheitshülle (4) und der Ringbau (20) aus Stahlbeton bestehen.

3. Reaktorbau nach Anspruch 1, dadurch gekennzeichnet, dass die Sicherheitshülle (4) in die horizontalen und vertikalen Richtungen vorgespannt ist, und dass die Umhüllung des Ringbaus (20) aus Stahlbeton besteht.

**Claims**

1. A building structure for a nuclear reactor, the structure comprising a confining enclosure (4) comprising a cylindrical skirt (6) closed at the top by a dome (8), a crown structure (20) extending around the enclosure (4) and comprising a cylindrical skirt (22) and a roof (24) connected to the cylindrical skirt (6) of the enclosure (4), the same and the crown structure (20) rising from a common general raft (2), internal structures (10) being provided within the enclosure (4) and being unconnected thereto, characterised in that the roof (24) of the crown structure (20) is in shape truncoconical or toroidal and is embedded in the cylindrical skirt (6) of the enclosure (4) at the height of the supports for the reactor building handling bridge, the general raft (2) comprising a high-inertia honeycomb part (26) below the crown structure (20) and a solid part (28) which is disposed below the honeycomb part (26) and below the enclosure (4), the internal structures (29) of the crown structure (20) bearing on the highinertia honeycomb part (26) of the general raft (2) and being disconnected from the external skirt (22), from the cylindrical skirt (6) of the enclosure (4) and from the roof (24) of the crown structure (20).

2. A reactor building structure according to claim 1, characterised in that the enclosure (4) and the crown structure (20) are of reinforced concrete.

3. A reactor building structure according to claim 1, characterised in that the enclosure (4) is prestressed horizontally and vertically and the casing of the crown structure (20) is of reinforced concrete.